# EUROPEAN PATENT SPECIFICATION

(11) **EP 0 965 299 B1**
(45) Date of publication and mention of the grant of the patent: **14.03.2001**
(21) Application number: 98122324.1
(22) Date of filing: 24.11.1998
(51) Int. Cl.: A47J 47/14

(54) **Container for transporting foods**
Transportbehälter für Nahrungsmittel
Conteneur pour transporter de la nourriture

(30) Priority: 19.06.1998 IT TO980113 U
(43) Date of publication of application: 22.12.1999
(73) Proprietor: Cridan Di Danilo Rusconi, 10133 Torino (IT)
(72) Inventor: Cridan Di Danilo Rusconi, 10133 Torino (IT)
(74) Representative: Robba, Pierpaolo

(56) References cited:
- EP-A- 0 622 309
- CH-A- 289 946
- DE-U- 9 420 946
- DE-U- 29 705 286
- GB-A- 663 827
- US-A- 3 387 650
- US-A- 3 805 018

## Description

The present invention refers to a container for transporting foods, and more precisely to a plastic container in which said foods, already prepared and protected, scheduled for a day's feeding, can be transported to the consumers so that they can eat them.

More and more diffused is the use of transporting pre-cooked foods, for a local use after a simple heating, when necessary, in order to effect a domiciliary service.

This is obviously valid for communities, schools, old people's houses, social services and meals management societies, where it is preferable and sometimes hygienically and sanitarily more safe transporting packed foods rather than prepare it in place.

EP-A-0622309 discloses a container provided with wells for storing food holders made of e.g. porcelain which can be also mounted one above the other (cf preamble of claim 1).

The arrangement according to EP-A-0622309 however, renders the taking of the superimposed food difficult, especially when a plurality of food holders is stored in the wells and the food holders have to be taken one at a time on the occasion of different meals during the day.

Another container for food is disclosed in DE 297 05 286 Ul which refers to a plastic meal tray system comprising stacking and separable plates having wells defined therein.

A classic container for transporting foods is disclosed in DE 9420946, which however is not designed for storing superimposed dishes or food holders.

Another traditional container for transporting foods is disclosed in US 3,805,018. The container according to US 3,805,018 can be heated and is shaped so as to define a plurality of compartments therein within which loose food may be stored.

Purpose of the present invention is to overcome the aforesaid and other drawbacks found in normal containers used for transporting pre-cooked foods, providing a suitable container, in which it is scheduled and provided all the necessary for a day and wherein every thing has its place and wherein a place is provided for every thing.

The essence of the invention will be clear from the following claims.

The invention will now be described in detail with particular reference to the accompanying drawings, furnished as a not limitative example, in which:

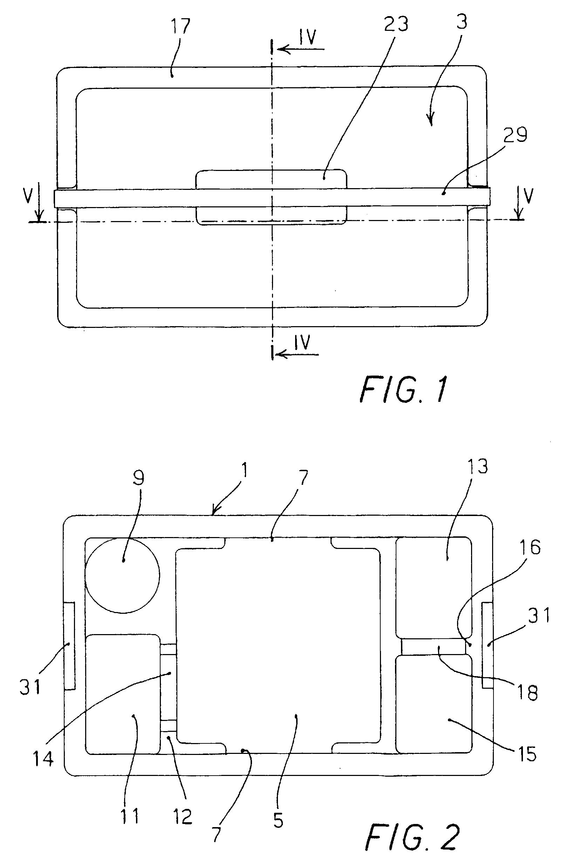

- Figure 1 is a plan view of the container according to invention, closed;
- Figure 2 is a plan view of the container of Figure 1 without cover;

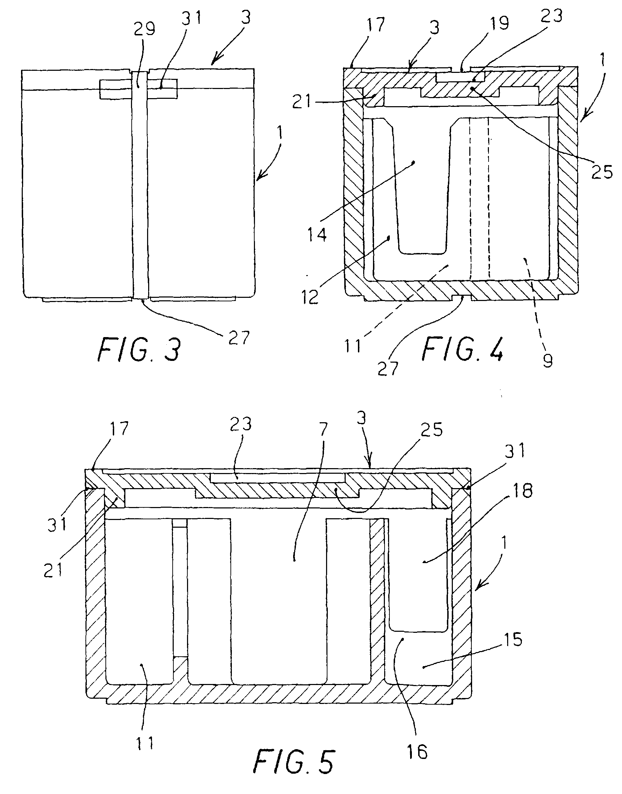

- Figure 3 is a lateral view of the container of Figure 1;
- Figure 4 is a cross section performed according to line IV-IV of Figure 1;
- Figure 5 is a cross section performed according to line V-V of Figure 1.

As it appears evident from the Figures, the present container is substantially an hollow parallelepiped body 1 provided with a cover 3.

Said container is made of suitable plastic material, washable and reusable several times.

In its central part it is provided a space 5 for containing dishes, wherein are provided six courses superimposed, packed and heat sealed with suitable plastic material on corresponding single-use dishes, three courses for the lunch and three for the supper.

Said central space 5 is provided squared, like obviously the dishes (not shown in Figure) that are to be inserted, and it is provided with two opposite enlargements 7, between the sides walls and the superimposed dishes, provided for the taking of said dishes together with the corresponding courses.

Sideways to said central space 5, are further provided on one side two spaces or wells, a circular one 9 for a (plastic) water bottle and a rectangular one 11 for a paper bag containing wine, as "Tavernello" or similar.

The wall 12 that divides said rectangular well 11 from the central space 5 is provided with a trapezoidal opening 14 for the taking of said paper bag.

On the other side, sideways to said central space 5 are provided two other square wells 13 and 15, one for the bread and the cutlery, the other for the fruit.

Said two square wells 13 and 15 are also provided separated by a wall 16 equipped with a U opening 18 for the taking of the bread and the fruit.

The cover 3 is provided substantially plain with an upper perimetral edge 17, interrupted on the small sides by two cavities 19, and an inferior edge 21 allowing the insertion of said cover 3 in the body 1 and its closing; moreover on the plain upper surface of said cover 3 it is provided a rectangular hollow 23 and on the plain lower surface a prominence 25, also rectangular.

The cover 3 and the bottom of the body 1 are so shaped in order to allow their superimposition during storing and transporting.

The parallelepiped body 1 is provided with an external groove 27 running longitudinally along the center line of the bottom wall in order to allow the application of a closing strap 29 when the container is closed, said strap running in said groove 27 and being closed on the upper part passing through the cavities 19 of the cover 3.

It is to be noted the cavity 23 provided on the cover 3, on its external side, that allows, when the strap 29 is placed, to take and lift the closed container, obviously with the appropriate cautions; said strap 29 and said cavity 23 acting as a handle for the taking and the lifting of the closed container, with suitable means.

The prominence 25 provided on the lower surface of the cover 3 can be used as an upper support for an eventual thermal plate, placed between said prominence 25 and the foods for maintaining the correct temperature inside the container.

It is to be noted again that on each of the small sides of the parallelepiped container it is provided, in correspondence of the center line of said sides, two adjacent semi-cavities, one on the edge of the cover 3 and the other on the edge of the body 1, which, when the cover is applied, form two real cavities 31, that constitute two invitations for lifting the cover 3 from the body 1 of the container and to open it.

## Claims

1. Container for transporting foods, comprising an hollow parallelepiped body (1) and a cover (3) made of a suitable plastic material, washable and reusable and provided in its inside part with a plurality of spaces (5) and/or wells (9, 11 13, 15) for containing the foods, the drinks and the cutlery, said spaces or wells being separated by corresponding walls (12,16), **characterised in that** at least one of said spaces or wells separating walls (12,16) is provided with an opening (14,18)) for the taking of the content of the corresponding space or well, whereby when a plurality of pieces is staked in said spaces or wells the taking thereof one at a time is facilitated.

2. Container according to claim 1, characterised in that:
- in its central part it is provided a space (5) for containing dishes, in which are provided several courses superimposed, packed and heat sealed on corresponding single-use dishes, half for the lunch and half for the supper;
- said central space (5) is provided squared, like the dishes that are to be inserted, and is provided with two opposite enlargements (7), between the internal side walls of the container (1) and the pile of dishes, provided for the taking of said dishes containing the respective courses to be eaten, after eventual heating;
- sideways to said central space (5) are provided on one side two spaces or wells, a circular one (9) for a bottle of water and rectangular one (11) for a paper bag of wine;
- on the other side, always sideways to said central space (5), are provided two other squared wells (13, 15), one for the bread and the cutlery, the other for the fruit.

3. Container according to claim 2, characterised in that the wall (12) that separates said rectangular well (11) from the central space (5) is equipped with a trapezoidal opening (14) for the taking of said paper bag, and that the wall (16) that separates said two squared wells (13) and (15) is equipped with a "U" shaped opening (18) for the taking of both the bread and the fruit.

4. Container according to claim 1, characterised in that the cover (3) is substantially flat with an upper raised perimetrical edge (17), interrupted on the short sides by two cavities (19), and a lower edge (21) that allows its insertion in the body (1) and its closure; on the upper plain surface of said cover (3) being provided a rectangular cavity (23) and on the lower plain surface a rectangular prominence (25), and that the parallelepiped body (1) is provided with an external groove (27) running longitudinally along the center line of the bottom wall in order to allow the application of a closing strap (29) when the container is closed, strap that runs in said groove (27) and passes through the cavities (19) of the cover (3).

5. Container according to claim 1, characterised in that on each of the short sides of the parallelepiped that forms the container are provided, in correspondence with the center line of said sides, two adjacent semicavities, one on the edge of the cover (3) and the other on the edge of the body (1), which, when the cover is applied, form two real cavities (31), that constitute two invitations for taking and lifting the cover (3) from the body (1) and opening the container.

6. Container according to claim 2, characterised in that the number of provided courses in the spaces (5) of the body (1) is equal to six: three for the lunch and three for the supper.

7. Container according to claim 4, characterised in that the cavity (23) provided on the cover (3), on its external part, allows, when the strap (29) is applied, to take and lift the closed container, obviously with the appropriate cautions; said strap (29) and said cavity (23) acting as a handle for the taking and the lifting of the closed container, with suitable means.

8. Container according to claim 4, characterised in that the cover (3) and the bottom of the body (1) are so shaped that they permit their stacking in the stocking transporting phases.

9. Container according to claim 4, characterised in that the prominence (25) provided on the flat lower surface of the cover (3) can be used as an upper support for an eventual thermal plate, placed between said prominence (25) and the foods for maintaining the correct temperature.

## Patentansprüche

1. Behälter zum Transportieren von Nahrungsmitteln, welcher einen hohlen quaderförmigen Körper (1) und einen Deckel (3) umfaßt, die aus einem geeigneten Kunststoffmaterial bestehen, abwaschbar und wiederverwendbar ist, und in seinem inneren Teil mit einer Vielzahl von Räumen (5) und/oder Vertiefungen (9, 11, 13, 15) zum Aufnehmen der Nahrungsmittel, der Getränke und des Bestecks versehen ist, wobei die Räume oder Vertiefungen durch entsprechende Wände (12, 16) getrennt sind, dadurch gekennzeichnet, daß mindestens eine der die Räume oder Vertiefungen trennenden Wände (12, 16) mit einer Öffnung (14, 18) zum Entnehmen des Inhalts des entsprechenden Raums oder der entsprechenden Vertiefung versehen ist, wobei, wenn eine Vielzahl von Stücken in den Räumen oder Vertiefungen gestapelt ist, deren einzelne Entnahme erleichtert wird.

2. Behälter nach Anspruch 1, dadurch gekennzeichnet, daß:
- in seinem mittleren Teil ein Raum (5) zum Aufnehmen von Schalen vorgesehen ist, in denen verschiedene Gänge übereinandergelagert, verpackt und heißversiegelt in entsprechenden Schalen zur einmaligen Verwendung vorgesehen sind, und zwar eine Hälfte für das Mittagessen und eine Hälfte für das Abendessen;
- der mittlere Raum (5) quadratisch wie die Schalen, die eingefügt werden sollen, vorgesehen ist und mit zwei gegenüberliegenden Verbreiterungen (7) zwischen den inneren Seitenwänden des Behälters (1) und dem Stapel von Schalen versehen ist, welche zur Entnahme der Schalen, die die jeweiligen nach einem eventuellen Erhitzen zu essenden Gänge enthalten, vorgesehen sind;
- seitlich des mittleren Raums (5) auf einer Seite zwei Räume oder Vertiefungen vorgesehen sind, eine kreisförmige (9) für eine Flasche Wasser und eine rechteckige (11) für einen Beutel Wein;
- auf der anderen Seite, immer seitlich des mittleren Raums (5), zwei weitere quadratische Vertiefungen (13, 15) vorgesehen sind, eine für das Brot und das Besteck, die andere für das Obst.

3. Behälter nach Anspruch 2, dadurch gekennzeichnet, daß die Wand (12), die die rechteckige Vertiefung (11) von dem mittleren Raum (5) trennt, mit einer trapezförmigen Öffnung (14) zum Entnehmen des Beutels ausgestattet ist, und daß die Wand (16), die die zwei quadratischen Vertiefungen (13) und (15) trennt, mit einer "U"-förmigen Öffnung (18) zum Entnehmen von sowohl dem Brot als auch dem Obst ausgestattet ist.

4. Behälter nach Anspruch 1, dadurch gekennzeichnet, daß der Deckel (3) im wesentlichen eben ist mit einer oberen erhabenen Umfangskante (17), die auf den kurzen Seiten durch zwei Hohlräume (19) unterbrochen ist, und einer unteren Kante (21), die sein Einsetzen in den Körper (1) und sein Verschließen ermöglicht; auf der oberen ebenen Oberfläche des Deckels (3) ein rechteckiger Hohlraum (23) und auf der unteren ebenen Oberfläche ein rechteckiger Vorsprung (25) vorgesehen sind, und daß der quaderförmige Körper (1) mit einer äußeren Nut (27) versehen ist, die der Länge nach entlang der Mittellinie der Bodenwand verläuft, um das Aufbringen eines Verschlußbandes (29) zu ermöglichen, wenn der Behälter geschlossen ist, wobei das Band in der Nut (27) verläuft und durch die Hohlräume (19) des Deckels (3) hindurchgeht.

5. Behälter nach Anspruch 1, dadurch gekennzeichnet, daß auf jeder der kurzen Seiten des Quaders, der den Behälter bildet, entsprechend der Mittellinie der Seiten zwei benachbarte Halbhohlräume vorgesehen sind, einer an der Kante des Deckels (3) und der andere an der Kante des Körpers (1), die, wenn der Deckel aufgebracht wird, zwei echte Hohlräume (31) bilden, die zwei Aufforderungen zum Nehmen und Abheben des Deckels (3) vom Körper (1) und zum Öffnen des Behälters darstellen.

6. Behälter nach Anspruch 2, dadurch gekennzeichnet, daß die Anzahl der vorgesehenen Gänge in dem Raum (5) des Körpers (1) gleich sechs ist: drei für das Mittagessen und drei für das Abendessen.

7. Behälter nach Anspruch 4, dadurch gekennzeichnet, daß der Hohlraum (23), der auf dem Deckel (3) an seinem äußeren Teil vorgesehen ist, ermöglicht, wenn das Band (29) aufgebracht ist, den geschlossenen Behälter zu nehmen und anzuheben, offensichtlich mit der entsprechenden Vorsicht; wobei das Band (29) und der Hohlraum (23) als Griff zum Nehmen und Anheben des geschlossenen Behälters mit einem geeigneten Mittel wirken.

8. Behälter nach Anspruch 4, dadurch gekennzeichnet, daß der Deckel (3) und der Boden des Körpers (1) so geformt sind, daß sie ihr Stapeln in den Lager- und Transportphasen ermöglichen.

9. Behälter nach Anspruch 4, dadurch gekennzeichnet, daß der Vorsprung (25), der auf der ebenen unteren Oberfläche des Deckels (3) vorgesehen ist, als obere Halterung für eine eventuelle Wärmeplatte verwendet werden kann, die zwischen dem Vorsprung (25) und den Nahrungsmitteln zum Aufrechterhalten der korrekten Temperatur angeordnet wird.

## Revendications

1. Conteneur pour transporter de la nourriture, comprenant un corps parallélépipédique creux (1) et un couvercle (3) réalisés dans un matériau plastique adéquat, lavable et réutilisable et disposant dans sa partie intérieure d'une pluralité d'espaces (5) et/ou de puits (9, 11, 13, 15) pour contenir la nourriture, les boissons et les couverts, lesdits espaces ou puits étant séparés par des parois correspondantes (12, 16), caractérisé en ce qu'au moins une des parois de séparation desdits espaces ou puits (12, 16) est équipée d'une ouverture (14, 18) pour la prise du contenu de l'espace ou du puits correspondant, par quoi lorsqu'une pluralité de pièces sont empilées dans lesdits espaces ou puits, la prise de celles-ci, une à la fois, est facilitée.

2. Conteneur selon la revendication 1, caractérisé en ce que:
- dans sa partie centrale est prévu un espace (5) pour contenir de la vaisselle, dans laquelle sont fournis plusieurs plats superposés, emballés et thermoscellés sur de la vaisselle à usage unique correspondante, moitié pour le déjeuner et moitié pour le dîner;
- ledit espace central (5) est prévu de forme carrée, comme la vaisselle qui doit y être insérée, et est équipé de deux élargissements opposés (7), entre les parois du côté interne du conteneur (1) et la pile de vaisselle, prévus pour la prise de ladite vaisselle contenant les plats respectifs à manger, après un chauffage éventuel;
- les côtés dudit espace central (5) sont équipés, d'un côté, de deux espaces ou puits, un espace circulaire (9) pour une bouteille d'eau et un espace rectangulaire (11) pour un cubitainer de vin;
- de l'autre coté, toujours latéralement audit espace central (5), sont prévus deux autres puits carrés (13, 15), un pour le pain et le couvert, l'autre pour le fruit.

3. Conteneur selon la revendication 2, caractérisé en ce que la paroi (12) qui sépare ledit puits rectangulaire (11) de l'espace central (5) est équipée d'une ouverture trapézoïdale (14) pour la prise dudit cubitainer, et en ce que la paroi (16) qui sépare lesdits deux puits carrés (13) et (15) est équipée d'une ouverture (18) en forme de " U " pour la prise du pain et du fruit.

4. Conteneur selon la revendication 1, caractérisé en ce que le couvercle (3) est sensiblement plat avec un bord périmétrique supérieur relevé (17), interrompu sur les côtés courts par deux cavités (19), et un bord inférieur (21) permettant son insertion dans le corps (1) et sa fermeture; une cavité rectangulaire (23) étant prévue sur la surface simple supérieure dudit couvercle (3), et une proéminence rectangulaire (25) sur la surface simple inférieure, et caractérisé en ce que le corps parallélépipédique (1) est équipé d'une rainure externe (27) courant longitudinalement le long de l'axe central de la paroi de fonds afin de permettre l'application d'une sangle de fermeture (29) lorsque le conteneur est fermé, sangle qui court dans ladite rainure (27) et passe dans les cavités (19) du couvercle (3).

5. Conteneur selon la revendication 1, caractérisé en ce que, sur chacun des côtés courts du parallélépipède qui forme le conteneur, sont prévues, en correspondance avec l'axe central desdits côtés, deux semicavités adjacentes, une sur le bord du couvercle (3) et l'autre sur le bord du corps (1), qui, lorsque le couvercle est appliqué, forment deux cavités réelles (31), qui constituent deux invitations à prendre et soulever le couvercle (3) du corps (1) et à ouvrir le conteneur.

6. Conteneur selon la revendication 2, caractérisé en ce que le nombre de plats prévus dans l'espace (5) du corps (1) est égal à six: trois pour le déjeuner et trois pour le dîner.

7. Conteneur selon la revendication 4, caractérisé en ce que la cavité (23) prévue dans le couvercle (3), sur sa partie externe, permet, lorsque la sangle (29) est employée, de prendre et soulever le conteneur fermé, évidemment avec les précautions appropriées; ladite sangle (29) et ladite cavité (23) agissant comme une poignée pour prendre et soulever le conteneur fermé, avec des moyens adéquats.

8. Conteneur selon la revendication 4, caractérisé en ce que le couvercle (3) et le fond du corps (1) sont d'une forme telle qu'ils permettent leur empilement pendant les phases de transport et de stockage.

9. Conteneur selon la revendication 4, caractérisé en ce que la proéminence (25) prévue sur la surface inférieure plate du couvercle (3) peut être utilisée comme un support supérieur pour une éventuelle plaque thermique, placée entre ladite proéminence (25) et la nourriture pour maintenir la température correcte.
